# EUROPEAN PATENT APPLICATION

(11) **EP 2 388 715 A1**
(43) Date of publication of application: **23.11.2011**
(21) Application number: 11001873.6
(22) Date of filing: 07.03.2011
(51) Int. Cl.: G06F 17/30

(54) **Mobile terminal and controlling method thereof for navigating web pages**

(30) Priority: 20.05.2010 KR 20100047324
(71) Applicant: LG Electronics Inc., Seoul 150-721 (KR)
(72) Inventor: Roh, Hyeongseok, Seoul 153-801 (KR); Ryu, Sungsoo, Seoul 153-801 (KR); Koh, Handeck, Seoul 153-801 (KR)
(74) Representative: Frenkel, Matthias Alexander

(57) **Abstract**

A mobile terminal is presented. The mobile terminal includes a memory unit, a wireless communication unit, a touchscreen configured to display a webpage including at least one hyperlink, and a controller configured to store a hyperlink selected on the touchscreen in the memory unit, display information associated with the selected hyperlink on the touchscreen, and display, on the touchscreen, a webpage linked to the selected hyperlink when the displayed information is selected.

## Description

### BACKGROUND OF THE INVENTION

### Field of the Invention

The present invention relates to a mobile terminal, and more specifically, to a mobile terminal and a controlling method thereof. Although the present invention is suitable for a wide scope of applications, it is particularly suitable for facilitating a more convenient user experience with regard to use of a mobile terminal.

### Discussion of the Related Art

A mobile terminal is a device which may be configured to perform various functions. Examples of such functions include data and voice communications, capturing images and video via a camera, recording audio, outputting music via a speaker system, and displaying images and video on a display. Some terminals include additional functionality which supports game playing, while other terminals are also configured as multimedia players. More recently, mobile terminals have been configured to receive broadcast and multicast signals which permit viewing of contents, such as videos and television programs.

Generally, terminals can be classified into mobile terminals and stationary terminals according to a presence or non-presence of mobility. Additionally, the mobile terminals can be further classified into handheld terminals and vehicle mount terminals according to their portability.

There are ongoing efforts to support and increase the functionality of mobile terminals. Such efforts include software and hardware improvements, as well as changes and improvements in the structural components which form the mobile terminal.

A mobile terminal may support a wireless Internet function. A user may search and view various webpages via the wireless Internet function. Specifically, a webpage may include a plurality of hyperlinks. A user may access a specific webpage by selecting a hyperlink.

Accordingly, in order to find specific information, the user may have to navigate through various webpages. Specifically, the various webpages may be displayed in a new window or the current webpage may shift to display information associated with the selected hyperlink.

Thus, memory use may increase when selecting a hyperlink which opens a new window on the current webpage. Additionally, the user is inconvenienced by having to close unnecessary webpage windows. Furthermore, the user is inconvenienced by having to shift back and forth between locations on a webpage when the current webpage is shifted to a position associated with the selected hyperlink.

### SUMMARY OF THE INVENTION

Accordingly, the present invention is directed to a mobile terminal and controlling method thereof that substantially obviate one or more problems due to limitations and disadvantages of the related art.

According to one embodiment, a mobile terminal is presented. The mobile terminal includes a memory unit, a wireless communication unit, a touchscreen configured to display a webpage including at least one hyperlink, and a controller configured to control the touchscreen to display the webpage, characterized by, the controller configured to store a hyperlink selected on the touchscreen in the memory unit, to control the touchscreen to display information associated with the selected hyperlink , and to control the touchscreen to display a webpage linked to the selected hyperlink when the displayed information is selected.

According to another feature, the controller determines a frequency which the at least one hyperlink is accessed and controls the at least one hyperlink to be distinguished according to the frequency which the at least one hyperlink is accessed.

According to yet another feature, the controller controls the webpage linked to the selected hyperlink to be displayed as a popup window on the touchscreen. Alternatively, the controller controls the information to be displayed as a thumbnail image on the touchscreen. Furthermore, the controller may control the webpage linked to the selected hyperlink to be displayed as a preview image on the thumbnail.

According to still yet another feature, the controller controls webpages respectively linked to at least two selected hyperlinks to be sequentially displayed on the touchscreen with a preset periodicity.

According to another feature, the controller partitions the touchscreen into a first region and a second region, and wherein the webpage is displayed on the first region and the information associated with the selected hyperlink is displayed on the second region.

According to still another feature, the information displayed on the second region is displayed as a page in a book. Alternatively, the information displayed on the second region is displayed as a tree structure.

According to another feature, the controller controls an icon to be displayed on the touchscreen, such that the selected hyperlink is displayed in the icon and a hyperlink dragged to the icon may be stored in the memory unit.

According to one feature, the controller controls the webpages respectively linked to at least two selected hyperlinks to be sequentially displayed on the touchscreen with a preset periodicity when the icon is selected. Additionally, each time the icon is selected, the controller sequentially shifts the display of the webpages respectively linked to the at least two selected hyperlinks backward or forward. Furthermore, when the icon receives an input having a first pattern, the controller sequentially shifts the display of the webpages respectively linked to the at least two selected hyperlinks forward, and wherein when the icon receives an input having a second pattern, the controller sequentially shifts display of the webpages respectively linked to the at least two selected hyperlinks backward.

According to yet another feature, when the hyperlink is selected, the controller displays a memo setting window for writing a memo to be associated with the selected hyperlink.

According to still yet another feature, the controller maps the selected hyperlink and a webpage address linked to the selected hyperlink to each other, and controls the mapped hyperlink and webpage address to be stored as a table in the memory.

According to yet another feature, the controller periodically checks the stored hyperlink to determine if the hyperlink is valid.

According to another embodiment, a method of controlling a mobile terminal is presented. The method includes displaying a webpage including a plurality of hyperlinks, storing a hyperlink selected from the plurality of hyperlinks of the webpage in a memory of the mobile terminal, displaying information associated with the selected hyperlink, and displaying a webpage linked to the selected hyperlink corresponding to the displayed information when the displayed information is selected.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention.

FIG. 1 is a block diagram of a mobile terminal according to an embodiment of the present invention.

FIG. 2A is a front perspective view of a mobile terminal according to an embodiment of the present invention.

FIG. 2B is a rear perspective view of a mobile terminal according to an embodiment of the present invention.

FIG. 3 is a flowchart for a method of controlling a mobile terminal according to an embodiment of the present invention.

FIG. 4 and FIG. 5 illustrate a hyperlink combining function on a webpage according to an embodiment of the present invention.

FIG. 6 and FIG. 7 illustrate a process for identifying hyperlinks within a webpage according to an embodiment of the present invention.

FIG. 8 illustrates a process for selecting and storing hyperlinks on a webpage while a hyperlink combining function is executed according to an embodiment of the present invention.

FIGs. 9 to 26 illustrate a process for combining and displaying hyperlinks within a webpage and then displaying a webpage associated with the combined hyperlinks according to an embodiment of the present invention.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

As used herein, the suffixes "module," "unit," and "part" are used for elements in order to facilitate the disclosure only. Therefore, significant meanings or roles are not given to the suffixes themselves and it is understood that the "module," "unit," and "part" can be used together or interchangeably.

Mobile terminals described in this disclosure can include a mobile phone, a smart phone, a laptop computer, a digital broadcast terminal, a PDA (personal digital assistant), a PMP (portable multimedia player), and a navigation system.

Except where applicable to a mobile terminal only, it will be appreciated by those skilled in the art that features described herein with reference to one or more embodiments may be applicable to a stationary terminal such as a digital TV, or a desktop computer.

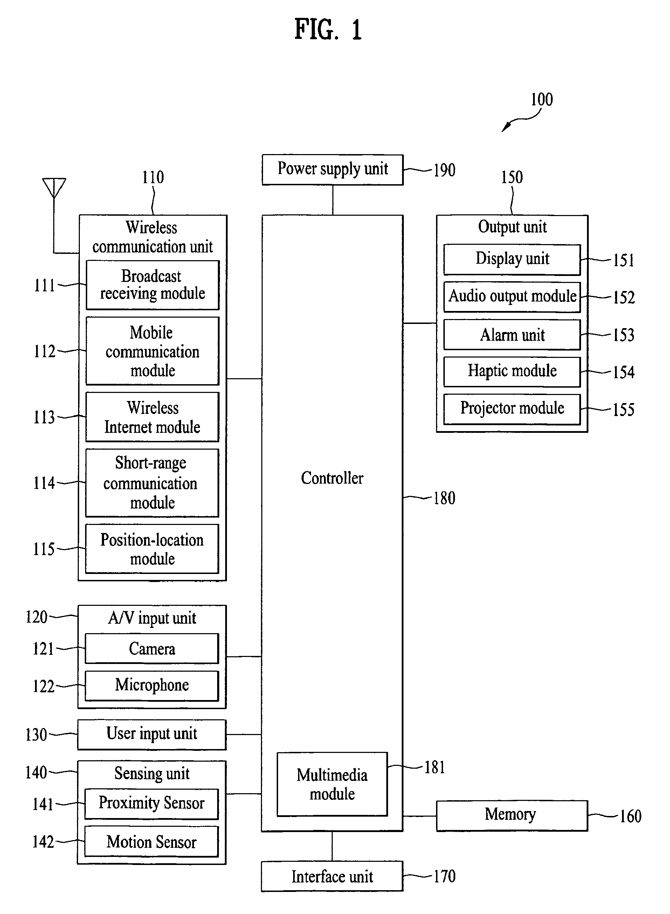

FIG. 1 is a block diagram of a mobile terminal 100 according to one embodiment of the present invention. Referring to FIG. 1, the mobile terminal 100 includes a wireless communication unit 110, an A/V (audio/video) input unit 120, a user input unit 130, a sensing unit 140, an output unit 150, a memory 160, an interface unit 170, a controller 180, and a power supply unit 190. FIG. 1 shows the mobile terminal 100 having various components, but it is understood that implementing all of the illustrated components is not a requirement. More or fewer components may be implemented according to various embodiments.

The wireless communication unit 110 typically includes one or more components which permit wireless communication between the mobile terminal 100 and a wireless communication system or network within which the mobile terminal 100 is located. For instance, the wireless communication unit 110 can include a broadcast receiving module 111, a mobile communication module 112, a wireless Internet module 113, a short-range communication module 114, and a position-location module 115.

The broadcast receiving module 111 receives a broadcast signal and/or broadcast associated information from an external broadcast managing server via a broadcast channel. The broadcast channel may include a satellite channel and/or a terrestrial channel.

The broadcast managing server is generally a server which generates and transmits a broadcast signal and/or broadcast associated information or a server which is provided with a previously generated broadcast signal and/or broadcast associated information and then transmits the provided signal or information to a terminal. The broadcast signal and/or broadcast associated information received by the broadcast receiving module 111 may be stored in a suitable device, such as a memory 160.

The broadcast signal may be implemented as a TV broadcast signal, a radio broadcast signal, and/or a data broadcast signal, among other signals. If desired, the broadcast signal may further include a broadcast signal combined with a TV or radio broadcast signal.

The broadcast associated information includes information associated with a broadcast channel, a broadcast program, or a broadcast service provider. Furthermore, the broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of a digital multimedia broadcasting (DMB) system and an electronic service guide (ESG) of a digital video broadcast-handheld (DVB-H).

The broadcast receiving module 111 may be configured to receive broadcast signals transmitted from various types of broadcast systems. By nonlimiting example, such broadcasting systems may include a digital multimedia broadcasting-terrestrial (DMB-T) system, a digital multimedia broadcasting-satellite (DMB-S) system, DVB-H, the data broadcasting system known as media forward link only (MediaFLO™) and an integrated services digital broadcast-terrestrial (ISDB-T) system. Optionally, the broadcast receiving module 111 can be configured to be suitable for other broadcasting systems as well as the above-noted digital broadcasting systems.

The mobile communication module 112 transmits/receives wireless signals to/from one or more network entities (e.g., a base station, an external terminal, and/or a server). Such wireless signals may carry audio, video, and data according to text/multimedia messages.

The wireless Internet module 113 supports Internet access for the mobile terminal 100. This module may be internally or externally coupled to the mobile terminal 100. The wireless Internet technology can include WLAN (Wireless LAN), Wi-Fi, Wibro™ (Wireless broadband), Wimax™ (World Interoperability for Microwave Access), and HSDPA (High Speed Downlink Packet Access).

The short-range communication module 114 facilitates relatively short-range communications. Suitable technologies for implementing this module include radio frequency identification (RFID), infrared data association (IrDA), ultra-wideband (UWB), as well as the networking technologies commonly referred to as Bluetooth™ and ZigBee™, to name a few.

The position-location module 115 identifies or otherwise obtains the location of the mobile terminal 100. According to one embodiment, this module may be implemented with a global positioning system (GPS) module.

Referring to FIG. 1, the audio/video (A/V) input unit 120 is configured to provide audio or video signal input to the mobile terminal 100. As shown, the A/V input unit 120 includes a camera 121 and a microphone 122. The camera 121 receives and processes (or produces) image frames of still pictures or video, which are obtained by an image sensor in a video call mode or a photographing mode. Furthermore, the processed image frames can be displayed on the display unit 151.

The image frames processed by the camera 121 can be stored in the memory 160 or can be transmitted to an external recipient via the wireless communication unit 110. Optionally, at least two cameras 121 can be provided in the mobile terminal 100 according to the environment of usage.

The microphone 122 receives an external audio signal while the portable device is in a particular mode, such as phone call mode, recording mode and voice recognition mode. This audio signal is processed and converted into electronic audio data. The processed audio data is transformed into a format transmittable to a mobile communication base station via the mobile communication module 112 in a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad (e.g., static pressure/capacitance), a jog wheel, and a jog switch.

The sensing unit 140 provides sensing signals for controlling operations of the mobile terminal 100 using status measurements of various aspects of the mobile terminal. For instance, the sensing unit 140 may detect an open/closed status of the mobile terminal 100, the relative positioning of components (e.g., a display and keypad) of the mobile terminal 100, a change of position (or location) of the mobile terminal 100 or a component of the mobile terminal 100, a presence or absence of user contact with the mobile terminal 100, and an orientation or acceleration/deceleration of the mobile terminal 100.

As an example, a mobile terminal 100 configured as a slide-type mobile terminal is considered. In this configuration, the sensing unit 140 may sense whether a sliding portion of the mobile terminal is open or closed. According to other examples, the sensing unit 140 senses the presence or absence of power provided by the power supply 190, and the presence or absence of a coupling or other connection between the interface unit 170 and an external device. According to one embodiment, the sensing unit 140 can include a proximity sensor 141 and a motion sensor 142.

The motion sensor 142 detects a body motion of the mobile terminal 100. The motion sensor 142 outputs a signal corresponding to the detected body motion to the controller 180.

The output unit 150 generates output relevant to the senses of sight, hearing, and touch. Furthermore, the output unit 150 includes the display unit 151, an audio output module 152, an alarm unit 153, a haptic module 154, and a projector module 155.

The display unit 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call. As another example, if the mobile terminal 100 is in a video call mode or a photographing mode, the display unit 151 may additionally or alternatively display images which are associated with these modes, the UI or the GUI.

The display module 151 may be implemented using known display technologies. These technologies include, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the displays can be implemented as a transparent or optically transmissive type, i.e., a transparent display. A representative example of the transparent display is a TOLED (transparent OLED). A rear configuration of the display unit 151 can be implemented as the optically transmissive type as well. In this configuration, a user may be able to see an object located at the rear of a terminal body on a portion of the display unit 151 of the terminal body.

At least two display units 151 can be provided in the mobile terminal 100 in accordance with one embodiment of the mobile terminal 100. For instance, a plurality of display units can be arranged to be spaced apart from each other or to form a single body on a single face of the mobile terminal 100. Alternatively, a plurality of display units can be arranged on different faces of the mobile terminal 100.

If the display unit 151 and a sensor for detecting a touch action (hereinafter called 'touch sensor') is configured as a mutual layer structure (hereinafter called 'touchscreen'), the display unit 151 is usable as an input device as well as an output device. In this case, the touch sensor can be configured as a touch film, a touch sheet, or a touchpad.

The touch sensor can be configured to convert pressure applied to a specific portion of the display unit 151 or a variation of capacitance generated from a specific portion of the display unit 151 to an electronic input signal. Moreover, the touch sensor is configurable to detect pressure of a touch as well as a touched position or size.

If a touch input is made to the touch sensor, a signal(s) corresponding to the touch input is transferred to a touch controller. The touch controller processes the signal(s) and then transfers the processed signal(s) to the controller 180. Therefore, the controller 180 is made aware when a prescribed portion of the display unit 151 is touched.

Referring to FIG. 1, a proximity sensor 141 can be provided at an internal area of the mobile terminal 100 enclosed by the touchscreen or around the touchscreen. The proximity sensor is a sensor that detects a presence or non-presence of an object approaching a prescribed detecting surface or an object existing (or located) around the proximity sensor using an electromagnetic field strength or infrared ray without mechanical contact. Hence, the proximity sensor 141 is more durable than a contact type sensor and also has utility broader than the contact type sensor.

The proximity sensor 141 can include one of a transmissive photoelectric sensor, a direct reflective photoelectric sensor, a mirror reflective photoelectric sensor, a radio frequency oscillation proximity sensor, an electrostatic capacity proximity sensor, a magnetic proximity sensor, and an infrared proximity sensor. If the touchscreen includes the electrostatic capacity proximity sensor, it is configured to detect the proximity of a pointer using a variation of an electric field according to the proximity of the pointer. In this configuration, the touchscreen (touch sensor) can be considered as the proximity sensor 141.

In the following description, for purposes of clarity, an action in which a pointer approaches the touchscreen without contacting the touchscreen is referred to as a "proximity touch." Furthermore, an action in which a pointer actually touches the touchscreen is referred to as a "contact touch." The position on the touchscreen that is proximity-touched by the pointer refers to the position of the pointer which vertically opposes the touchscreen when the pointer performs the proximity touch.

The proximity sensor detects a proximity touch and a proximity touch pattern (e.g., a proximity touch distance, a proximity touch duration, a proximity touch position, a proximity touch shift state). Information corresponding to the detected proximity touch action and the detected proximity touch pattern can be output to the touchscreen.

The audio output module 152 functions in various modes including a call-receiving mode, a call-placing mode, a recording mode, a voice recognition mode, and a broadcast reception mode to output audio data which is received from the wireless communication unit 110 or is stored in the memory 160. During operation, the audio output module 152 outputs audio relating to a particular function (e.g., call received, message received). The audio output module 152 may be implemented using one or more speakers, buzzers, other audio producing devices, and combinations thereof.

The alarm unit 153 outputs a signal for announcing the occurrence of a particular event associated with the mobile terminal 100. Typical events include a call received, a message received and a touch input received. The alarm unit 153 is able to output a signal for announcing the event occurrence by way of vibration as well as video or audio signal. The video or audio signal can be output via the display unit 151 or the audio output unit 152. Hence, the display unit 151 or the audio output module 152 can be regarded as a part of the alarm unit 153.

The haptic module 154 generates various tactile effects that can be sensed by a user. Vibration is a representative one of the tactile effects generated by the haptic module 154. The strength and pattern of the vibration generated by the haptic module 154 are controllable. For instance, different vibrations can be output in a manner of being synthesized together or can be output in sequence.

The haptic module 154 is able to generate various tactile effects in addition to the vibration. For instance, the haptic module 154 may generate an effect attributed to an arrangement of pins vertically moving against a contacted skin surface, an effect attributed to an injection/suction power of air though an injection/suction hole, an effect attributed to the skim over a skin surface, an effect attributed to a contact with an electrode, an effect attributed to an electrostatic force, and an effect attributed to the representation of a hot/cold sense using an endothermic or exothermic device.

The haptic module 154 can be implemented to enable a user to sense the tactile effect through a muscle sense of a finger or an arm as well as to transfer the tactile effect through direct contact. Optionally, at least two haptic modules 154 can be provided in the mobile terminal 100 in accordance with one embodiment of the mobile terminal 100.

The projector module 155 is an element for performing an image projector function using the mobile terminal 100. The projector module 155 is able to display an image, which is identical to or at least partially different from the image displayed on the display unit 151, on an external screen or wall according to a control signal of the controller 180.

In particular, the projector module 155 can include a light source generating light (e.g., a laser) for projecting an external image, an image producing means for producing an external image to project using the light generated from the light source, and a lens for enlarging the external image according to a predetermined focal distance. Furthermore, the projector module 155 can further include a device for adjusting an image projection direction by mechanically moving the lens or the whole module.

The projector module 155 can be a CRT (cathode ray tube) module, an LCD (liquid crystal display) module, or a DLP (digital light processing) module according to a device type. In particular, the DLP module is operated by enabling the light generated from the light source to reflect on a DMD (digital micro-mirror device) chip and can be advantageous for reducing the size of the projector module 155.

Preferably, the projector module 155 can be provided in a lengthwise direction of a lateral, front or backside direction of the mobile terminal 100. Furthermore, it is understood that the projector module 155 can be provided in any portion of the mobile terminal 100 as deemed necessary.

The memory 160 is generally used to store various types of data to support the processing, control, and storage requirements of the mobile terminal 100. Examples of such data include program instructions for applications operating on the mobile terminal 100, contact data, phonebook data, messages, audio, still pictures, and moving pictures. Furthermore, a recent use history or a cumulative use frequency of each data (e.g., use frequency for each phonebook, each message or each multimedia file) can be stored in the memory 160. Moreover, data for various patterns of vibration and/or sound output in response to a touch input to the touchscreen can be stored in the memory 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, or XD memory), or other similar memory or data storage device. Furthermore, the mobile terminal 100 is able to operate in association with a web storage for performing a storage function of the memory 160 on the Internet.

The interface unit 170 is often implemented to couple the mobile terminal 100 with external devices. The interface unit 170 receives data from the external devices or is supplied with the power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, and/or an earphone port.

The identity module is a chip for storing various kinds of information for authenticating a usage authority of the mobile terminal 100 and can include a User Identity Module (UIM), a Subscriber Identity Module (SIM), and/or a Universal Subscriber Identity Module (USIM). A device having the identity module (hereinafter called 'identity device') can be manufactured as a smart card. Therefore, the identity device is connectable to the mobile terminal 100 via the corresponding port.

When the mobile terminal 110 is connected to an external cradle, the interface unit 170 becomes a passage for supplying the mobile terminal 100 with power from the cradle or a passage for delivering various command signals input from the cradle by a user to the mobile terminal 100. Each of the various command signals input from the cradle or the power can operate as a signal enabling the mobile terminal 100 to recognize that it is correctly loaded in the cradle.

The controller 180 controls the overall operations of the mobile terminal 100. For example, the controller 180 performs the control and processing associated with voice calls, data communications, and video calls. The controller 180 may include a multimedia module 181 that provides multimedia playback. The multimedia module 181 may be configured as part of the controller 180, or implemented as a separate component. Moreover, the controller 180 is able to perform a pattern recognizing process for recognizing a writing input and a picture drawing input carried out on the touchscreen as characters or images, respectively.

The power supply unit 190 provides power required by various components of the mobile terminal 100. The power may be internal power, external power, or combinations of internal and external power.

Various embodiments described herein may be implemented in a computer-readable medium using, for example, computer software, hardware, or some combination of computer software and hardware. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

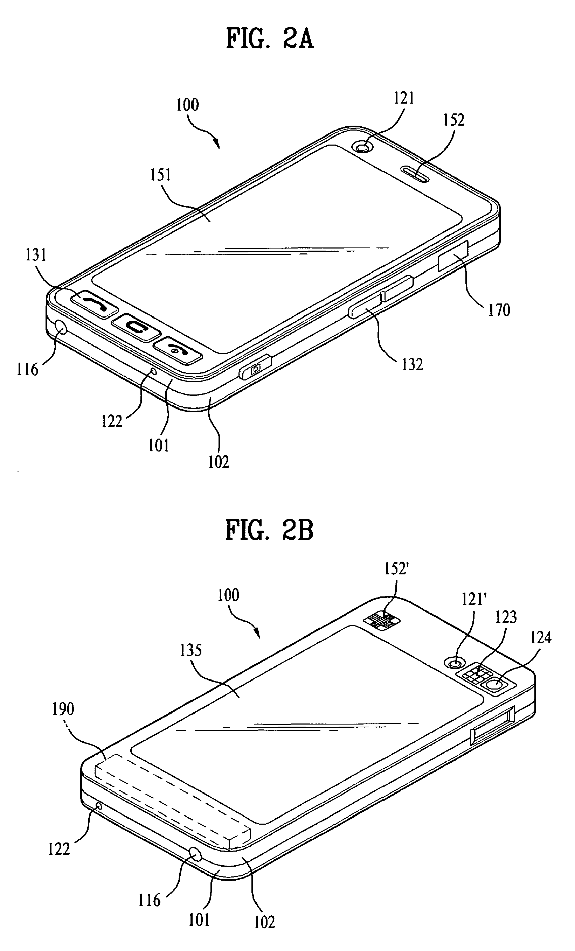

FIG. 2A is a front perspective view of a mobile terminal according to one embodiment of the present invention. The mobile terminal 100 illustrated in FIG. 2A has a bar type terminal body. However, the mobile terminal 100 may be implemented in a variety of different configurations.

Examples of such configurations include folder-type, slide-type, rotational-type, swing-type and combinations thereof. For ease of description, the following disclosure will primarily relate to a bar-type mobile terminal 100. However, it is understood that such disclosure may apply equally to other types of mobile terminals.

Referring to FIG. 2A, the mobile terminal 100 includes a case (a casing, housing, or cover) constituting an exterior of the mobile terminal. In the present embodiment, the case can be divided into a front case 101 and a rear case 102. Various electric/electronic parts are loaded in a space (volume) provided between the front and rear cases 101 and 102.

Optionally, at least one middle case can be further provided between the front and rear cases 101 and 102. The cases 101 and 102 are formed by injection molding of synthetic resin or can be formed of a metallic substance such as stainless steel (STS) or titanium (Ti) for example.

A display unit 151, an audio output unit 152, a camera 121, manipulating units 131 and 132, a microphone 122, and an interface unit 170 can be provided at the terminal body, and more particularly, at the front case 101. Manipulating units 131 and 132 are part of the user input unit 130 (see FIG. 1).

The display unit 151 occupies most of a main face of the front case 101. The audio output unit 152 and the camera 121 are provided at an area adjacent to an end portion of the display unit 151, while the manipulating unit 131 and the microphone 122 are provided at an area adjacent to the other end portion of the display unit 151. The manipulating unit 132 and the interface unit 170 can be provided at lateral sides of the front and rear cases 101 and 102.

The user input unit 130 may be manipulated (operated) to receive a command for controlling an operation of the terminal 100. Furthermore, the user input unit 130 may include a plurality of manipulating units 131 and 132. The manipulating units 131 and 132 can be referred to as a manipulating portion and may adopt any tactile mechanism that enables a user to perform a manipulation action by touch.

Content input by the first or second manipulating unit 131 or 132 can be divided between the two. For instance, a command such as start, end, and scroll is input via the first manipulating unit 131. Furthermore, a command for a volume adjustment of sound output from the audio output unit 152, or a command for switching to a touch recognizing mode of the display unit 151 can be input via the second manipulating unit 132.

FIG. 2B is a rear perspective view of the terminal of FIG. 2A. Referring to FIG. 2B, a camera 121' can be additionally provided at a rear of the terminal body, and more particularly, at the rear case 102. The camera 121' captures images along a direction that is substantially opposite to that of the camera 121 shown in FIG. 2A and may have a pixel resolution different from that of the camera 121.

According to one embodiment, for instance, the camera 121 has a relatively low number of pixels sufficient to capture and transmit a picture of a user's face for a video call, while the camera 121' has a relatively high number of pixels for capturing a photograph of a general subject. Furthermore, each of the cameras 121 and 121' can be installed on the terminal body to be rotated or popped up.

A flash 123 and a mirror 124 are additionally provided adjacent to the camera 121'. The flash 123 projects light toward a subject for photographing the subject using the camera 121'. When a user attempts to take a picture of the user (self-photography) using the camera 121', the mirror 124 enables the user to view the user's face as reflected by the mirror 124.

An additional audio output unit 152' can be provided at the rear of the terminal body. The additional audio output unit 152' is for implementing a stereo function together with the audio output unit 152 shown in FIG. 2A, and may also be used for implementing a speakerphone mode when speaking over the terminal.

A broadcast signal receiving antenna 116 can be additionally provided at the lateral side of the terminal body as well as an antenna for communication. The antenna may constitute a portion of the broadcast receiving module 111 shown in FIG. 1 and be retractable into the terminal body.

A power supply unit 190 for supplying power to the terminal 100 is provided at the terminal body. Furthermore, the power supply unit 190 can be configured to be built within the terminal body. Alternatively, the power supply unit 190 can be configured to be detachably connected to the terminal body.

A touchpad 135 for detecting a touch can be additionally provided at the rear case 102. The touchpad 135 can be configured as a light transmissive type similar to the display unit 151. In this case, if the display unit 151 is configured to output visual information from both of its faces, the visual information is viewable via the touchpad 135 as well. The information output from both of the faces can be entirely controlled by the touchpad 135. Alternatively, a display is further provided for the touchpad 135 so that a touchscreen can be provided at the rear case 102 as well.

The touchpad 135 is activated by interconnecting with the display unit 151 of the front case 101. The touchpad 135 can be provided at the rear of the display unit 151 to extend parallel to the display unit 151. The touchpad 135 can have a size equal to or smaller than the size of the display unit 151.

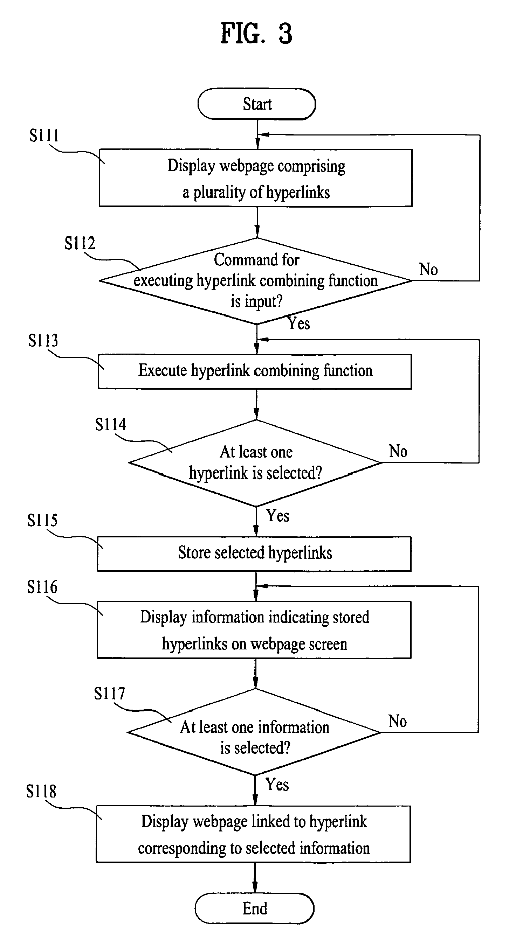

In the following description, a process for combining hyperlinks on a webpage according to the present invention and a process for displaying a webpage associated with the combined hyperlinks are explained in detail with reference to FIGs. 3 to 26.

FIG. 3 is a flowchart for a method of controlling a mobile terminal according to an embodiment of the present invention.

Referring to FIG. 3, the controller 180 of the mobile terminal 100 controls a webpage including a plurality of hyperlinks to be displayed on the display unit 151 (S111). While the webpage is displayed, the controller 180 executes a hyperlink combining function (S113) after a user inputs a command for executing the hyperlink combining function (S112).

In this example, the webpage can include a webpage initially displayed upon accessing the Internet or a webpage displayed as a result of a user's search. Moreover, the webpage can include a screen displayed in a full web browser or a web viewer.

The full web browser accesses the Internet via a web browser which directly decodes the HTML of a corresponding webpage and then displays the decoded HTML as a webpage.

The web viewer doses not browse and display a corresponding webpage using an Internet browser. Specifically, when using a web viewer, the mobile terminal makes a request for a webpage to an external web viewer providing server, wherein the corresponding web viewer providing server then loads the requested webpage and transmits an image of the loaded webpage to the mobile terminal 100.

The hyperlink combining function of the present invention enables a user to select at least one or more hyperlinks to combine together within the webpage.

Specifically, before the hyperlink combining function is executed, a webpage associated with a selected hyperlink is displayed. However, once the hyperlink combing function is executed, even if a hyperlink is selected, a webpage associated with the selected hyperlink is not displayed and the selected hyperlink is stored in the memory 160.

The combining function executing command input at step S112 may be set as a default within the memory 160 of the mobile terminal 100 or can be set by a user.

In this example, the combining function executing command can include a signal corresponding to a specific key input via the user input unit 130, a touch signal for a specific icon having the combining function executing command assigned thereto, a selection signal of a specific menu within the webpage, a touch signal to a preset region within the webpage, a touch gesture having a specific pattern set by a user, or a motion gesture of the body of the mobile terminal 100 according to a user setting. The controller 180 may provide a menu for setting the combining function executing command.

For example, if a user inputs the motion gesture command via the motion sensor 142, the controller 180 sets the hyperlink combining function executing command to the input motion gesture.

For another example, if a user inputs a touch gesture having a specific pattern, the controller 180 sets the hyperlink combining function executing command to the input touch gesture.

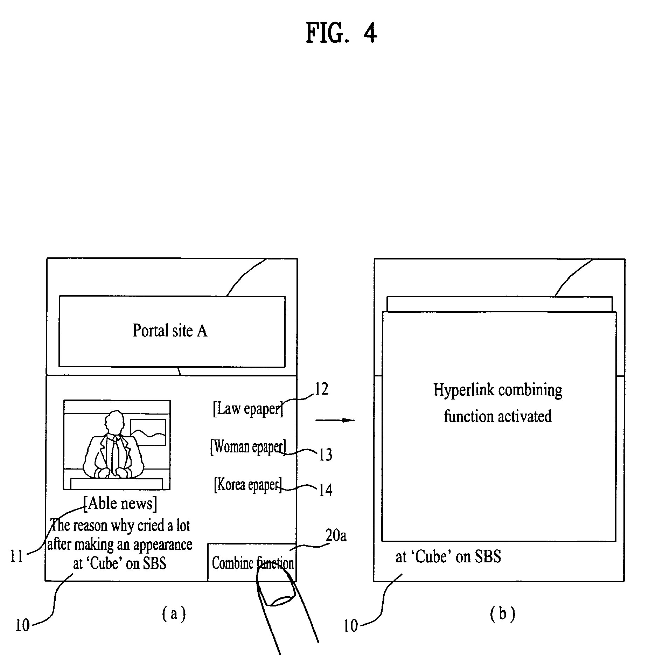

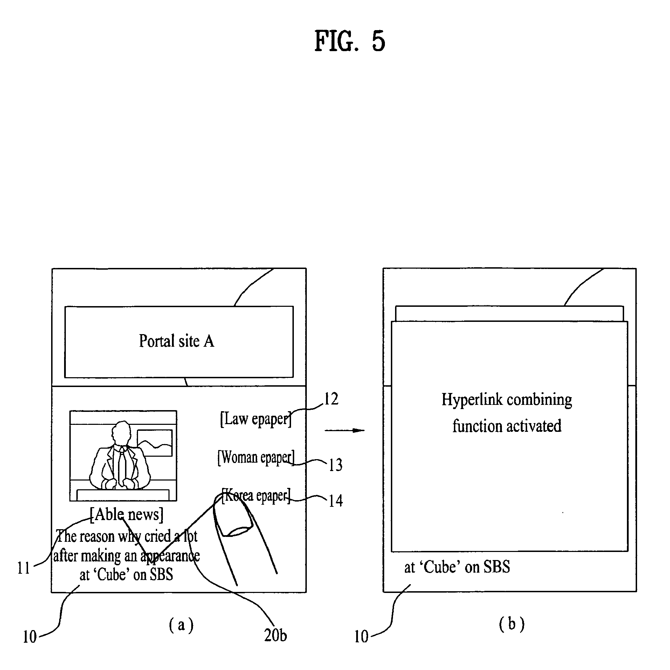

In the following description, a process for executing the hyperlink combining function according to the input of the combining function executing command in step S 112 is explained with reference to FIG. 4 and FIG. 5.

FIG. 4 and FIG. 5 illustrate the execution of a hyperlink combining function on a webpage according to an embodiment of the present invention.

FIG. 4(a) illustrates a webpage 10 including the first hyperlink 11, second hyperlink 12, third hyperlink 13, and fourth hyperlink 14 and a zone 20a for executing the hyperlink combining function. If a user selects the zone 20a (FIG. 4(a)), the controller 180 executes the hyperlink combining function (FIG. 4(b)).

FIG. 5(a) illustrates a webpage 10 including the first hyperlink 11, second hyperlink 12, third hyperlink 13, and fourth hyperlink 14 and a touch gesture 20b being input to the webpage 10. Referring to FIG. 5(a), the controller 180 searches the memory 160 for a function associated with the input touch gesture 20b. The controller 180 executes the hyperlink combining function if the hyperlink combining function is mapped to the input touch gesture 20b (FIG. 5(b)). The input touch gesture 20b may be any unique gesture input by the user and is not limited to the check mark illustrated in FIG. 5(a).

When the hyperlink combining function is executed, in order for a user to identify the hyperlinks on the webpage 10, the controller 180 controls the hyperlinks to be identifiably displayed on the webpage 10.

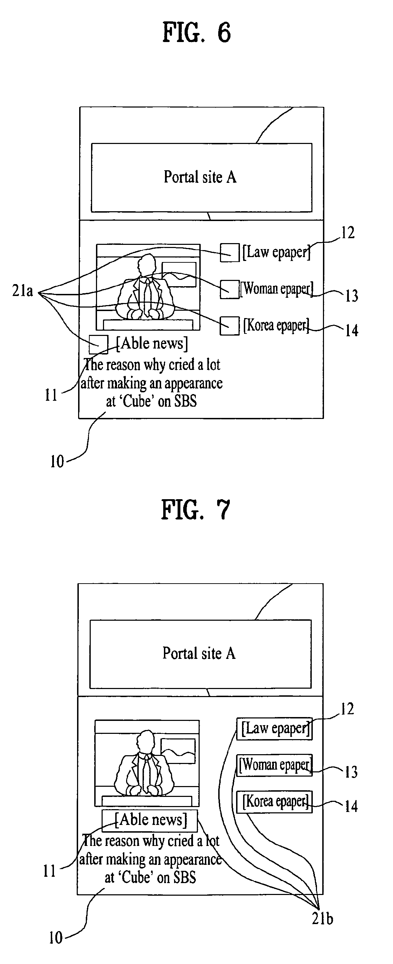

In the following description, a process for identifying the hyperlinks within the webpage 10 is explained with reference to FIG. 6 and FIG. 7.

FIG. 6 and FIG. 7 illustrate screen configurations for displaying a process for identifying hyperlinks within a webpage.

Referring to FIG. 6, if the hyperlink combining function is executed according to a user command, the controller 180 obtains positions of the hyperlinks 11 to 14 on the webpage 10 and may provide selection windows 21a next to the recognized hyperlinks 11 to 14.

A user may select at least two of the hyperlinks 11 to 14 to combine together from the webpage 10 via the selection windows 21a respectively displayed next to the hyperlinks 11 to 14.

Referring to FIG. 7, the controller 180 may obtain the hyperlinks 11 to 14 on the webpage 10 and then controls the obtained hyperlinks 11 to 14 to be identifiably displayed on the webpage 10.

Specifically, the controller 180 may display the hyperlinks 11 to 14 on the webpage 10 in a distinguishing manner, for example, the controller may adjust the transparency of each of the hyperlinks 11 to 14.

Additionally, as illustrated in FIG. 7, the hyperlinks 11 to 14 may be distinguished on the webpage 10 such that an outline of each of the hyperlinks 11 to 14 is represented as a box 21b.

When the user selects at least two hyperlinks the controller 180 may display the selected hyperlinks in a distinguishing manner, for example, the selected hyperlinks may differ from each other in color.

Moreover, the controller 180 obtains the frequency which each of the hyperlinks 11 to 14 are accessed during a preset period within the webpage 10 and may display the hyperlinks 11 to 14 according to an order of the obtained access frequency (not shown).

Moreover, the controller 180 may display the hyperlinks 11 to 14 according to a preset significance or priority within the webpage 10 (not shown). After a user has marked a hyperlink as important, if the important hyperlink exists within a current webpage, the controller 180 may distinguish the important hyperlink among the plurality of hyperlinks.

If at least two hyperlinks are marked as important by a user among a plurality of hyperlinks, the controller 180 may identifiably display the at least two hyperlinks according to the significance or priority set by the user.

Accordingly, referring back to FIG. 3, while the hyperlinks 11 to 14 are identifiably displayed on the webpage 10, if a user selects at least one hyperlink (S114), the controller 180 controls information relevant to the selected hyperlinks to be stored in the memory 160 (S115).

In this example, the hyperlink relevant information stored in the memory 160 may include a title of the corresponding hyperlink, an image representing the hyperlink, a text and image included in the hyperlink, a webpage address linked to the hyperlink, or the like.

Moreover, if the webpage 10 includes a web viewer screen, the controller 180 obtains coordinates for the hyperlink selected by the user and controls the information on the obtained coordinates to be stored in the memory 160.

When the coordinates' information on the hyperlink, which is stored in the memory 160, is selected by a user, the controller 180 transmits the selected coordinates' information to an external web viewer providing server. Subsequently, the web viewer providing server loads a webpage linked to the hyperlink corresponding to the coordinates and then transmits an image of the loaded webpage to the mobile terminal 100. In this example, the coordinates' information includes an address of the webpage 10 and a coordinates' value of the corresponding hyperlink on the webpage 10.

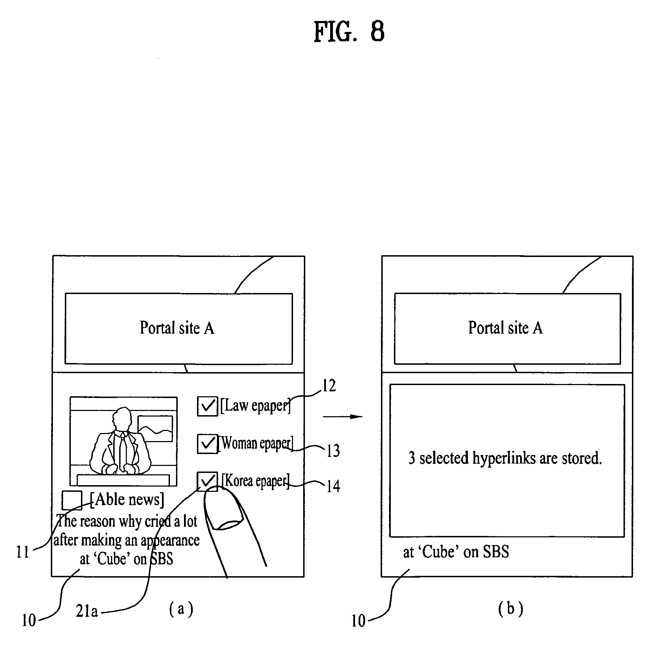

In the following description, a process for storing the hyperlinks selected from the webpage 10 is explained with reference to FIG. 8. FIG. 8 illustrates a screen configuration for selecting and storing hyperlinks on a webpage when a hyperlink combining function is executed.

FIG. 8(a) illustrates a user selecting three hyperlinks 12 to 14 to combine on a webpage 10. The controller 180 obtains information relevant to the hyperlinks 12 to 14 selected by the user and stores the obtained information in the memory 160 (FIG. 8(b)).

The controller 180 may control the hyperlinks 12 to 14 selected by the user to be stored in the memory 160 as information in a table.

Specifically, the controller 180 may configure the table, as shown in Table 1, as mapping a webpage address linked to each of the selected hyperlinks 12 to 14 to an address of the webpage 10 including the hyperlinks 12 to 14.

**(Table 1)**

| Webpage address | Hyperlink title | Address linked to hyperlink |
|---|---|---|
| Portal site A (www.Aportalsite.com) | Law epaper | www.law_epaper.com |
| | Woman epaper | www.woma_epaper.com |
| | Korea epaper | www.korea_epaper.com |

Referring to Table 1, an address linked to the law epaper hyperlink 12 selected from the webpage 10 is "www.law_epaper.com", an address linked to the woman epaper hyperlink 13 is "www.woman_epaper.com", and an address linked to the Korea epaper hyperlink 14 is "www.korea_epaper.com".

Thus, the controller 180 configures the table, as shown in Table 1, by mapping the address ("www.Aportalsite.com") of the "portal site A" webpage 10 to the address ("www.law_epaper.com") linked to the law epaper hyperlink 12, the address ("www.woman_epaper.com") linked to the woman epaper hyperlink 13, and the address ("www.korea_epaper.com") linked to the Korea epaper hyperlink 14.

The table mapping is utilized when the corresponding webpage 10 is re-accessed. Specifically, the table is searched for the information on the hyperlinks 12 to 14 combined within the re-accessed webpage 10 and the information can be provided to a user.

In this example, if the addresses of the hyperlinks stored in the table are changed or set to spam, access to the hyperlinks may no longer be available. Accordingly, the controller 180 periodically checks for inaccessible hyperlinks among the hyperlinks stored in the table and may delete the inaccessible hyperlinks.

Afterwards, referring back to FIG. 3, the controller 180 controls the above-described hyperlinks selected by the user to be stored in the memory 160 and controls information indicating the stored hyperlinks to be displayed on the webpage 10 (S116).

Subsequently, if at least one of the displayed information is selected (S 117), the controller 180 displays a webpage linked to the hyperlink associated with the selected information (S 118).

In this example, when the webpage linked to the hyperlink associated with the selected information has a relative address, the current webpage 10 is shifted to the location linked to the hyperlink. Subsequently, when the webpage linked to the hyperlink associated with the selected information has an absolute address, the controller 180 controls the webpage linked to the hyperlink to be displayed as a new window on the current webpage 10.

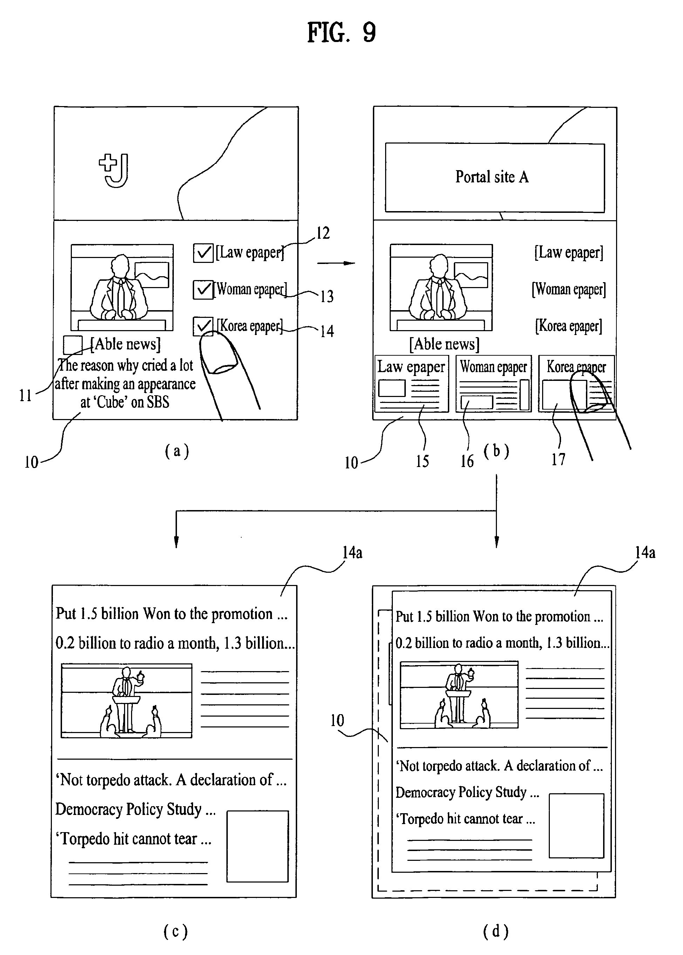

In the following description, various embodiments for a process for combining and displaying hyperlinks within a webpage are explained with reference to FIGs. 9 to 26.

FIG. 9 illustrates an embodiment wherein the information associated with the hyperlinks in step S116 (FIG. 3) is displayed as a thumbnail image. Additionally, FIG. 9 illustrates screen configurations for a process of displaying thumbnail images respectively indicating hyperlinks, a process for selecting the displayed thumbnail image, and a process for displaying a webpage corresponding to the selected thumbnail image.

Referring to FIG. 9(a), if second, third, and fourth hyperlinks 12, 13, and 14 are selected from a current webpage 10, the controller 180 controls information associated with the selected second, third, and fourth hyperlinks 12, 13, and 14 to be stored in the memory 160.

Referring to FIG. 9(b), the controller displays thumbnail images 15 to 17 representing the stored second, third, and fourth hyperlinks 12, 13, and 14 on the webpage 10.

In this example, referring to FIG. 9(b), a title of the hyperlink can be displayed within the corresponding thumbnail image. Additionally, a webpage linked to the corresponding hyperlink can be displayed as a preview form.

Moreover, in order to prevent the webpage 10 from being blocked by the corresponding thumbnail image, the corresponding thumbnail image may be transparently displayed on the webpage 10 (not shown).

Furthermore, if at least one thumbnail image, such as 'Korea epaper," is selected by a user (FIG. 9(b)), the controller 180 accesses a webpage 14a linked to the fourth hyperlink 14 corresponding to the selected thumbnail image and displays a screen of the accessed webpage 14a (FIGs. 9(c) and 9(d)).

In this example, if the webpage 14a linked to the fourth hyperlink 14 corresponding to the selected thumbnail image "Korea epaper" has a relative address, the controller 180 shifts the current webpage 10 to the location linked to the fourth hyperlink 14 (FIG. 9(c)).

Additionally, if the webpage 14a linked to the fourth hyperlink 14 corresponding to the selected thumbnail image "Korea epaper" has an absolute address, the controller 180 controls a screen of the webpage 14a linked to the fourth hyperlink 14 to be displayed in a new window (FIG. 9(d)).

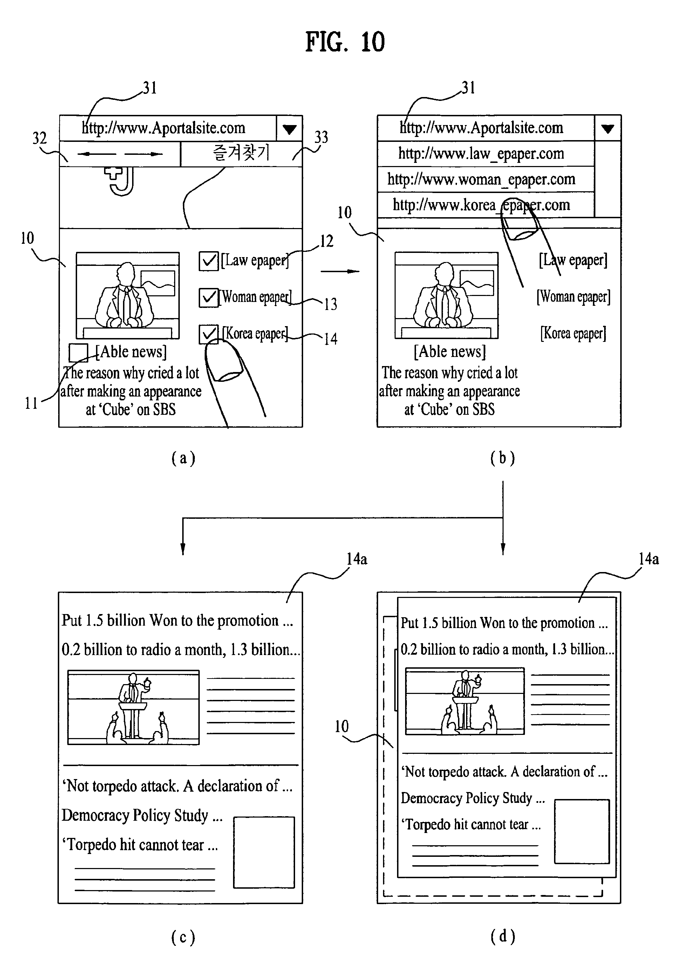

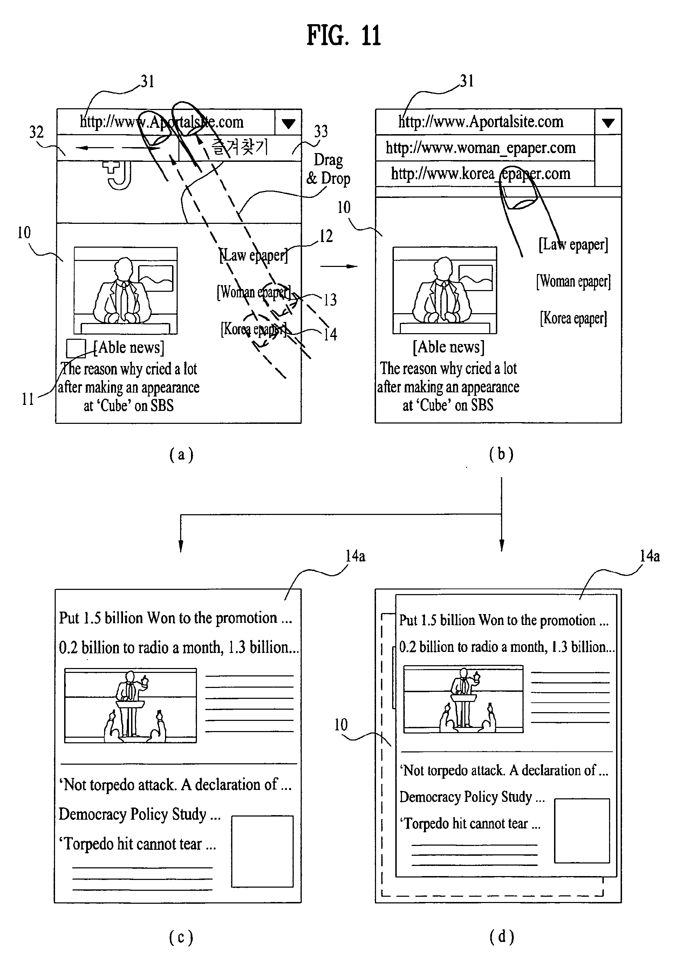

FIG. 10 and FIG. 11 illustrate an embodiment for a process of displaying the combined hyperlinks within a preset address menu on a webpage 10.

FIG. 10 illustrates screen configurations for a process of displaying hyperlinks within a preset address menu on a webpage, a process for selecting the corresponding hyperlink from the present menu, and a process for displaying a webpage linked to the selected hyperlink.

Specifically, FIG. 10 illustrates that the stored hyperlinks are displayed in a preset address menu within a webpage 10, which is previously set by a user or is set as a default in the mobile terminal 100.

First, as shown in FIG. 10(a), an address display window 31 for displaying an address of the webpage 10, a history menu 32 for shifting to a previous or next webpage from a current webpage 10, and a bookmark menu 33 are included in a region of the webpage 10.

In this example, if the second, third, and fourth hyperlinks 12, 13, and 14 are selected from the current webpage 10, the controller 180 controls information relevant to the selected second, third, and fourth hyperlinks 12, 13, and 14 to be stored in the memory 160 (FIG. 10(a)). The controller 180 registers the stored second, third, and fourth hyperlinks 12, 13, and 14 with the address display window 31 and displays the stored hyperlinks on the preset address display window 31 (FIG. 10(b)).

The description with reference to FIG. 10(b) is not limited to only displaying the stored hyperlinks in the address display window 31. The stored hyperlinks may be displayed in the history menu 32, the bookmark menu 33, or the like.

In this example, if the address, http://www.korea_epaper.com, linked to the fourth hyperlink 14 is selected from the address display window 31 (FIG. 10(b)), the controller 180 accesses the webpage 14a associated with the selected address, http://www.korea_epaper.com, via the wireless Internet module 113 and displays a screen of the accessed webpage 14a (FIG. 10(c) and FIG. 10(d)).

Furthermore, if the combined hyperlinks are dragged and dropped to a specific address menu within the webpage 10, the webpage addresses linked to the hyperlinks are registered and displayed within the corresponding address menu (FIG. 11).

Referring to FIG. 11, if the third and fourth hyperlinks 13 and 14 included in the webpage 10 are dragged and dropped to the address display window 31 by the user (FIG. 11(a)), the controller 180 registers and displays the webpage addresses linked to the dragged and dropped third and fourth hyperlinks 13 and 14 within the menu of the address display window 31 (FIG. 11(b)).

In this example, if the address, http://www.korea_epaper.com, linked to the fourth hyperlink 14 is selected from the address display window 31 by a user (FIG. 11(b)), the controller 180 accesses the webpage 14a having the selected address, http://www.korea_epaper.com, via the wireless Internet module 113 and then displays a screen of the accessed webpage 14a (FIG. 11 (c) and FIG. 11 (d)).

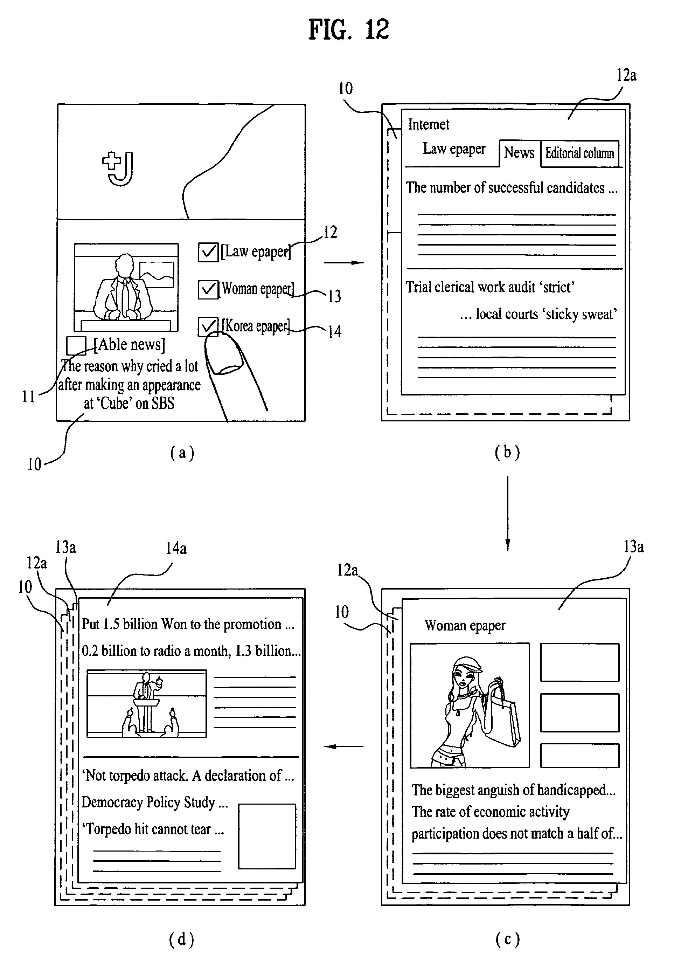

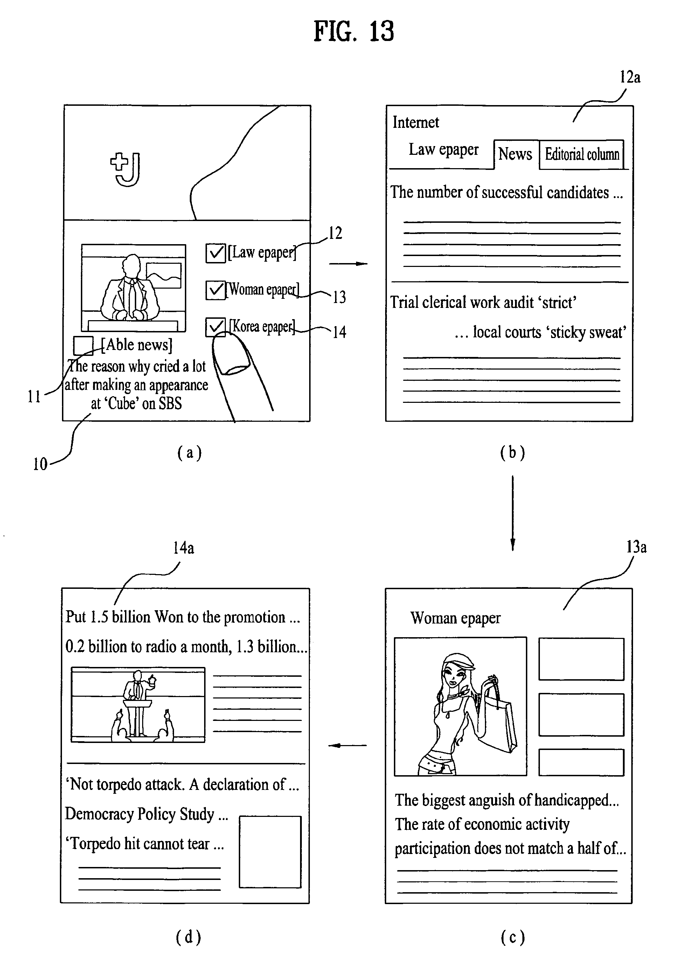

FIG. 12 and FIG. 13 illustrate an embodiment of a process for sequentially displaying hyperlinks selected by a user within a webpage 10 with a preset periodicity similar to a slide show.

In this example, steps S 116 and S 117 (FIG. 3) can be omitted from the process illustrated in FIG. 12 and FIG. 13.

First, if the second, third, and fourth hyperlinks 12, 13, and 14 are selected from a webpage 10, the controller 180 controls information relevant to the selected second, third, and fourth hyperlinks 12, 13, and 14 to be stored in the memory 160 (FIG. 12(a) and FIG. 13(a)). The controller 180 then sequentially displays the webpages 12a, 13a, and 14a, respectively linked to the stored second, third, and fourth hyperlinks 12, 13, and 14 with a preset periodicity (FIGs. 12(b)-12(c) and FIGs. 13(b)-13(d)).

Referring to FIG. 12, when the webpage addresses linked to the second, third, and fourth hyperlinks 12, 13, and 14 are absolute addresses, then the webpages 12a, 13a, and 14a, respectively linked to the second, third, and fourth hyperlinks 12, 13, and 14 are sequentially displayed on a new webpage 10.

Referring to FIG. 13, the webpage addresses linked to the second, third, and fourth hyperlinks 12, 13, and 14 are relative addresses, then the webpages 12a, 13a, and 14a, respectively linked to the second, third, and fourth hyperlinks 12, 13, and 14 are sequentially shifted on the current webpage 10.

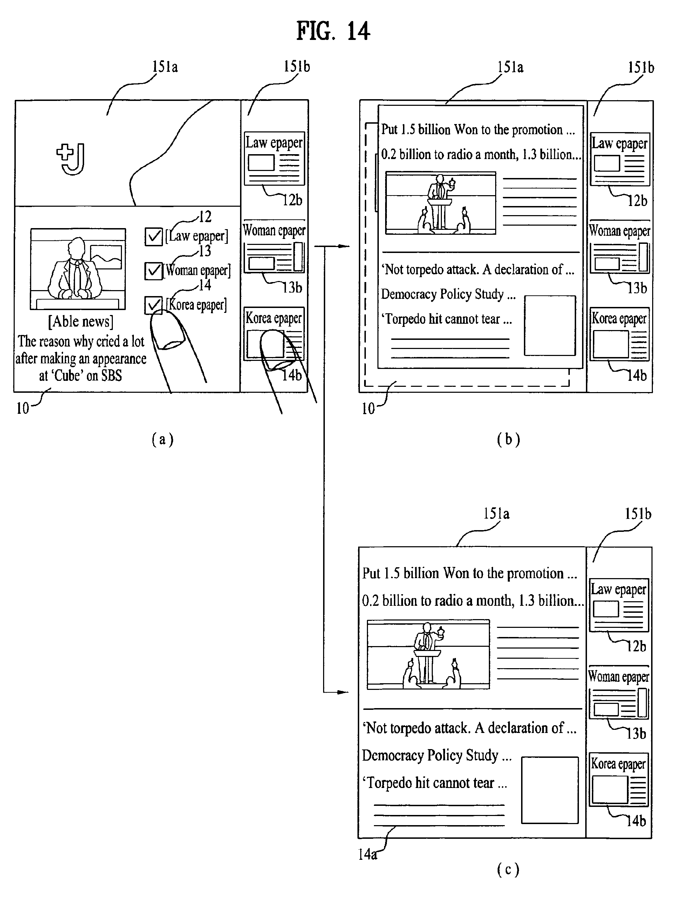

FIGs. 14 to 16 illustrate an embodiment for a process of partitioning a screen, such that a webpage is displayed into a first region and a second region, wherein the webpage content is displayed on the first region, and information indicating the hyperlinks are displayed on the second region.

Referring to FIG. 14(a), if second, third, and fourth hyperlinks 12, 13, and 14 are selected from a current webpage 10, the controller 180 controls information associated with the selected second, third, and fourth hyperlinks 12, 13, and 14 to be stored in the memory 160 and then partitions the webpage 10 into a plurality of regions including a first region 151a and a second region 151b.

The controller 180 displays the webpage 10 on the first region 151a and displays information 12b, 13b, and 14b, respectively indicating the stored second, third, and fourth hyperlinks 12, 13, and 14 on the second region 151b.

In this example, FIG. 14 illustrates one example where the information 12b, 13b, and 14b, respectively indicating the stored second, third, and fourth hyperlinks 12, 13, and 14 are displayed as thumbnail images.

Additionally, in this example, if at least one thumbnail image, such as thumbnail image 14b, "Korea epaper," is selected from the thumbnail images 12b, 13b, and 14b, by a user, (FIG. 14 (b) and FIG. 14 (c)), the controller 180 accesses the webpage 14a linked to the fourth hyperlink 14 corresponding to the selected thumbnail image 14b, "Korea epaper," and displays a screen of the accessed webpage 14a.

When the webpage 14a corresponding to the selected thumbnail image 14b is displayed, the controller 180 may distinguish the selected thumbnail image 14b to identify the thumbnail image 14b corresponding to the webpage 14a currently displayed within the second region 151b.

For example, the controller 180 may distinguish the thumbnail image 14b in a manner of adjusting at least a transparency, a display color, a display size, a brightness, or the like within the second region 151b.

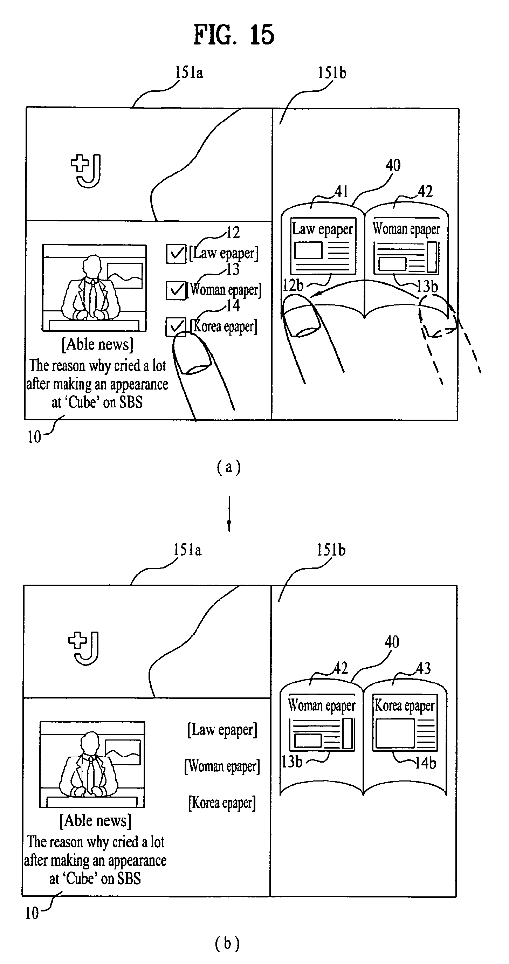

FIG. 15 illustrates an embodiment for a process of displaying an ebook image 40, the ebook image 40 may be viewed within the second region 151b. The second region 151 b may also display thumbnail images 12b, 13b, and 14b, associated with hyperlinks 12, 13, and 14, respectively, selected by a user on the pages 41 and 42 of the ebook.

As an example, when the user selects the second, third, and fourth hyperlinks 12, 13, and 14, the controller 180 displays the ebook 40 on the second region 151 b and arranges the thumbnail images 12b, 13b and 14b associated with the second, third, and fourth hyperlinks 12, 13, and 14 on the pages 41 to 43 of the ebook 40 (FIGs. 15(a) and 15(b)).

Specifically, the controller 180 displays the thumbnail images 12b and 13b corresponding to the second and third hyperlinks 12 and 13 on a first page 41 and a second page 42 of the ebook 40, respectively. Additionally, in this example, when a user provides an input, such as a flicking motion, to the ebook 40, the controller 180 controls the thumbnail image 14b corresponding to the fourth hyperlink 14 to be displayed on a third page 43 of the ebook 40 (FIG.15(b)).

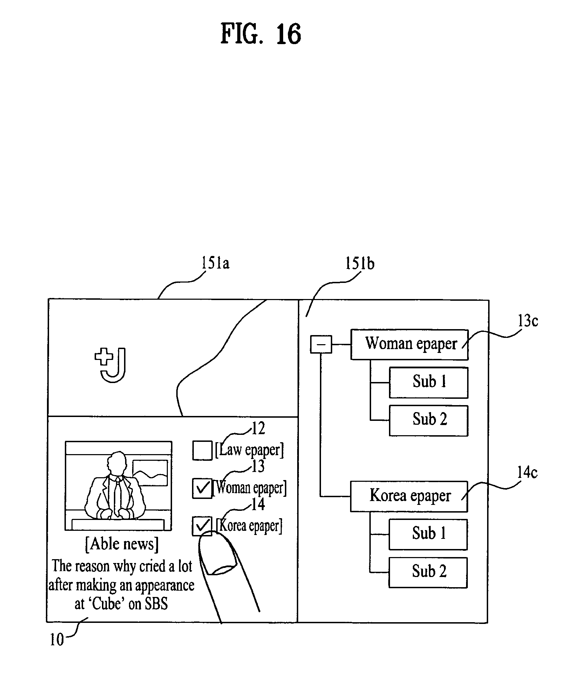

FIG. 16 illustrates an embodiment for a process of displaying the information indicating the hyperlinks 13 and 14 selected by the user on the second region 151b using a tree structure.

Referring to FIG. 16, if the user selects the third and fourth hyperlinks 13 and 14, the controller 180 displays information 13c and 14c associated with the selected hyperlinks 13 and 14, respectively, on the second region 151b as a tree structure.

In this example, the tree structure is displayed as sorted according to a temporal sequence for selecting the hyperlinks 13 and 14 or an order preset by the user. Alternatively, the tree structure may be displayed as sorted in order of the frequency of use of the hyperlinks.

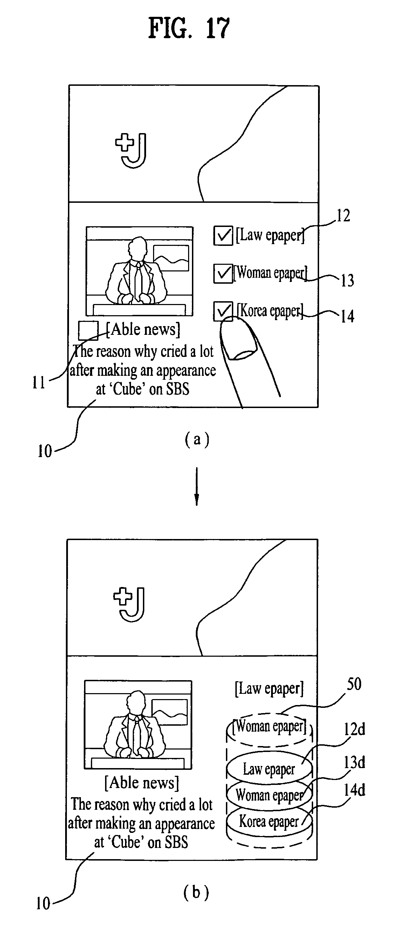

FIGs. 17 to 23 illustrate embodiments for a process of displaying a storage box icon 50 for storing hyperlinks selected by a user on a webpage 10 and displaying webpages linked to the hyperlinks via the storage box 50.

Referring to FIG. 17(a), if second, third, and fourth hyperlinks 12, 13, and 14 are selected from the webpage 10, the controller 180 controls information on the selected hyperlinks 12, 13, and 14 to be stored in the memory 160. Referring to FIG. 17(b), the controller 180 controls the information 12d, 13d, and 14d, of the respective hyperlinks 12, 13, and 14 to be displayed on the storage box 50.

Additionally, information 12d, 13d, and 14d of the respective hyperlinks 12 to 14 can be displayed in a manner of being stacked within the storage box 50. Alternatively, the information 12d, 13d, and 14d, of the respective hyperlinks 12 to 14 can be displayed in a manner of being sorted within the storage box 50 as icons or thumbnail images.

As disclosed above, when information 12d, 13d, and 14d of the respective hyperlinks 12, 13, and 14 are stored in the storage box 50, if information is selected from the storage box 50, the controller 180 accesses and displays a webpage linked to the hyperlink associated with the selected information.

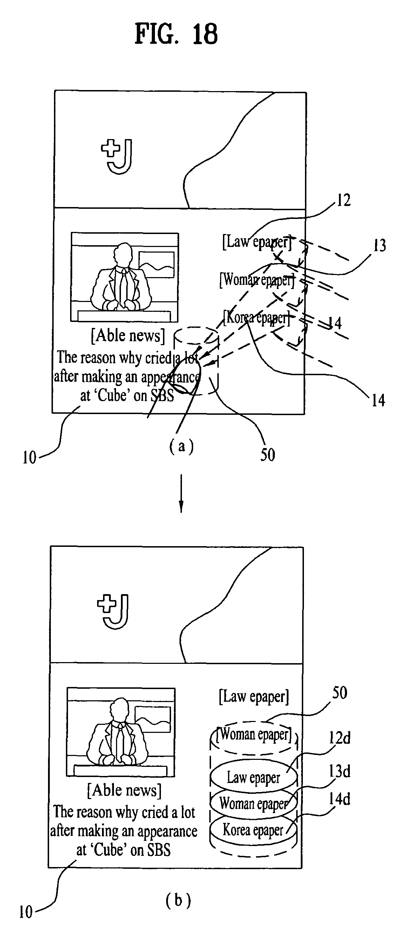

Referring to FIG. 18(a), the controller 180 may display the storages box 50 on the webpage 10 before the hyperlinks 12, 13, and 14 in the webpage 10 are selected and stored.

As illustrated in FIG. 18(b), when the hyperlinks 12, 13, and 14 are dragged and dropped into the storage box 50 the controller 180 displays the information 12d, 13d, and 14d, of the respective hyperlinks 12, 13, and 14 on the storage box 50 in the order which the hyperlinks were dragged and dropped onto the storage box 50.

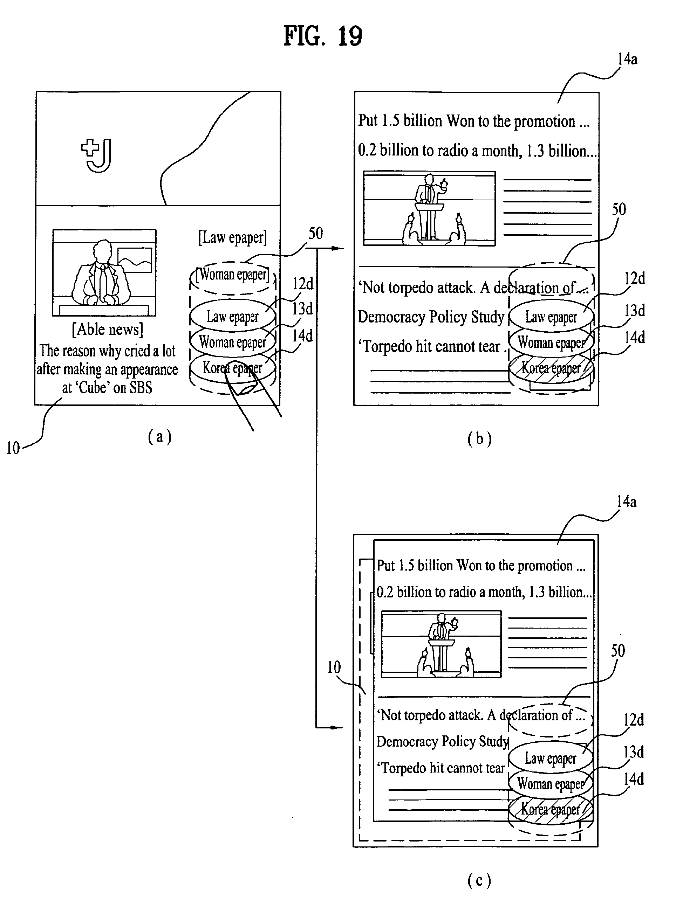

Referring to FIG. 19(a), when the information 12d, 13d, and 14d, of the respective hyperlinks 12, 13, and 14 are displayed within the storage box 50, if the information 14d of the fourth hyperlink 14 is selected, the controller 180 accesses the webpage 14a linked to the fourth hyperlink 14 and displays the accessed webpage 14a (FIG. 19(b) and FIG. 19(c)).

In this example, once the information 14d has been selected, the controller 180 may display the information 14d of the selected fourth hyperlink 14 within the storage box 50 such that the information 14d is distinguished from other information 12d and 13d.

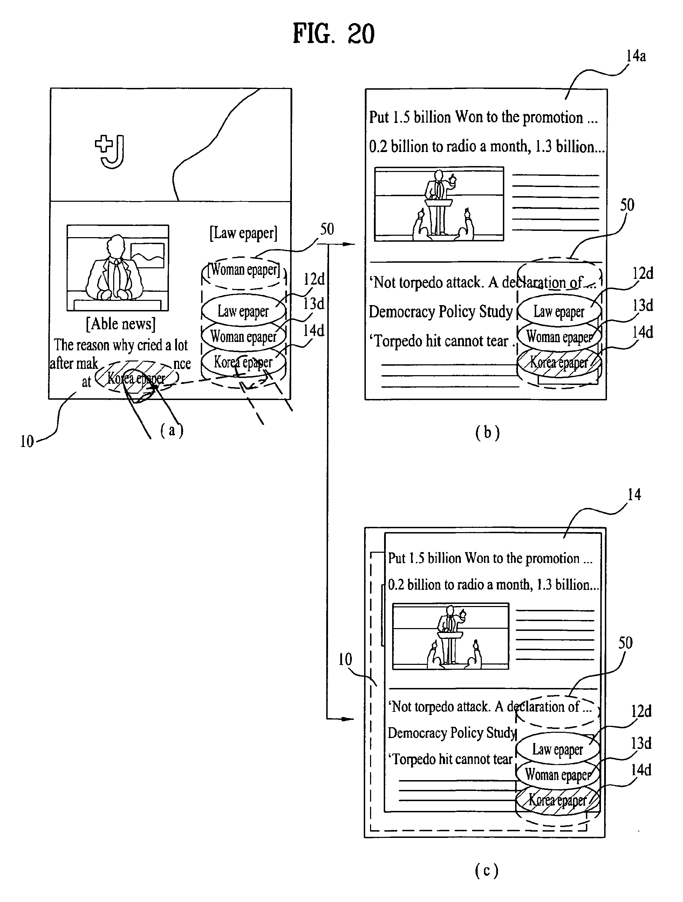

Referring to FIG. 20(a), when the information 12d, 13d, and 14d, of the respective hyperlinks 12, 13, and 14 are displayed within the storage box 50, if the information 14d is dragged and dropped out of the storage box 50, the controller 180 may display the webpage 14a linked to the fourth hyperlink 14 corresponding to the selected information 14d (FIGs. 20(b) and 20(c)).

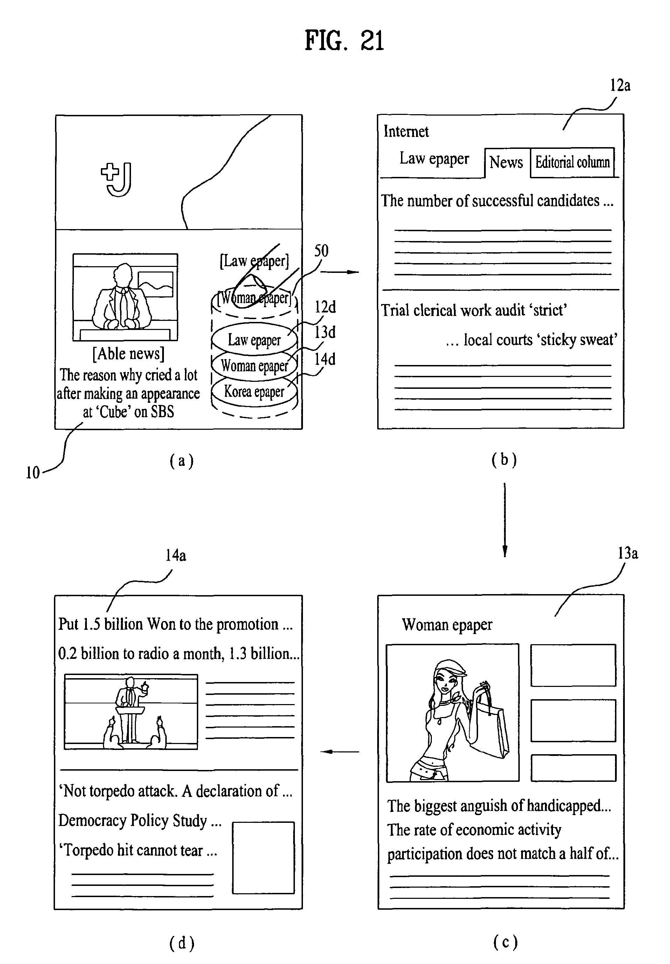

Referring to FIG. 21 (a), when the information 12d, 13d, and 14d, of the respective hyperlinks 12 to 14 are displayed within the storage box 50, if the storage box 50 is selected, the controller 180 may sequentially display the webpages 12a, 13a, and 14a respectively linked to the hyperlinks 12, 13, and 14 stored in the storage box 50 with a preset periodicity (FIGs. 21(b)-21(d)).

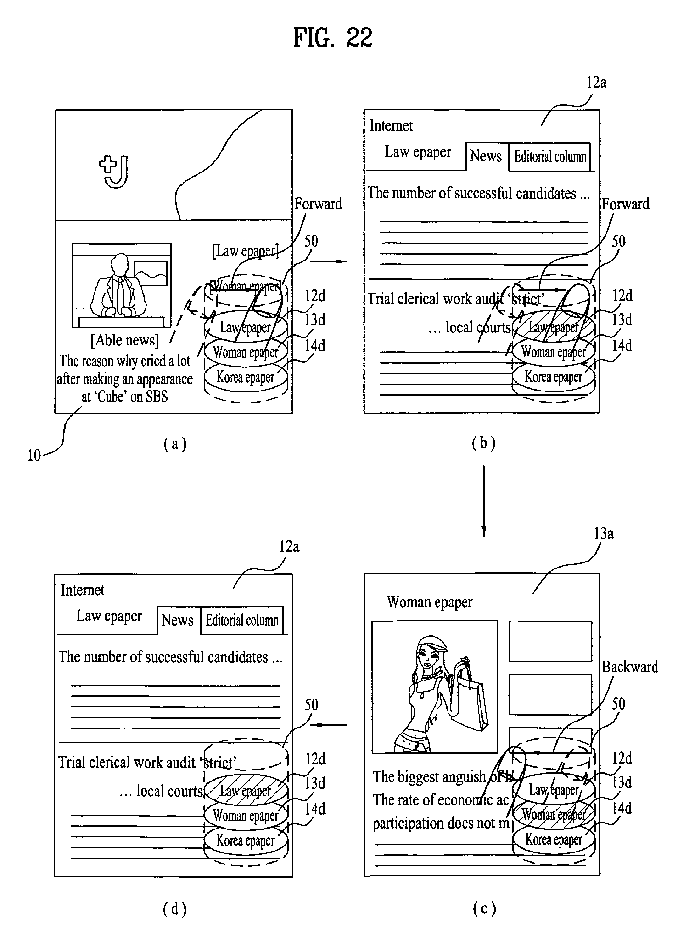

Referring to FIG. 22(a), when the information 12d, 13d, and 14d, of the respective hyperlinks 12, 13, and 14 is displayed within the storage box 50, if the storage box 50 receives an input having a first pattern, the controller 180 displays the webpage 12a linked to the second hyperlink 12 stored in the storage box 50 (FIG. 22(b)).

Referring to FIG. 22(c), while displaying the webpage 12a linked to the second hyperlink 12, if the storage box 50 receives an input having the first pattern, the controller 180 displays the webpage 13a linked to the third hyperlink 13.

Specifically, each time the storage box 50 receives an input with a first pattern, the controller 180 sequentially displays each of the webpages 12a, 13a and 14a of the respective hyperlinks 12, 13, and 14.

In this example, the touch having the first pattern may be a flicking touch performed in a certain direction, such as left-to-right or bottom-to-top.

Referring to FIG. 22(c), when the webpage 13a linked to the third hyperlink 13 is displayed, if the storage box 50 receives an input having a second pattern which differs from the first pattern, the controller 180 displays the webpage 12a linked to the second hyperlink 12, which is previous to the third hyperlink 13 (FIG. 22(d)).

Specifically, each time the storage box 50 receives an input having the second pattern, the controller 180 sequentially displays each of the webpages 12a, 13a, and 14a, of the respective hyperlinks 12, 13, and 14 in a manner of displaying the previous webpages 12a, 13a and 14a.

In this example, the touch having the second pattern may be a flicking touch performed in a certain direction, such as left-to-right or bottom-to-top.

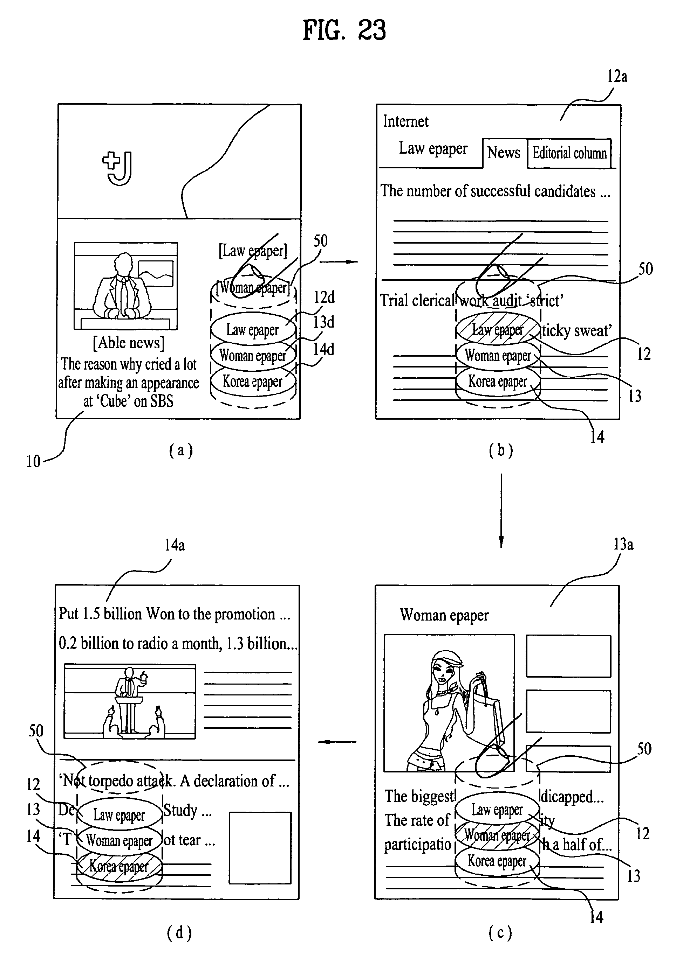

Referring to FIGs. 23(a) to 23(d), when the information 12d, 13d, and 14d, of the respective hyperlinks 12, 13, and 14 are displayed within the storage box 50, each time the storage box 50 is selected, the controller 180 displays the webpages 12a, 13a and 14a respectively linked to the hyperlinks 12, 13, and 14 stored in the storage box 50 in a sequential manner.

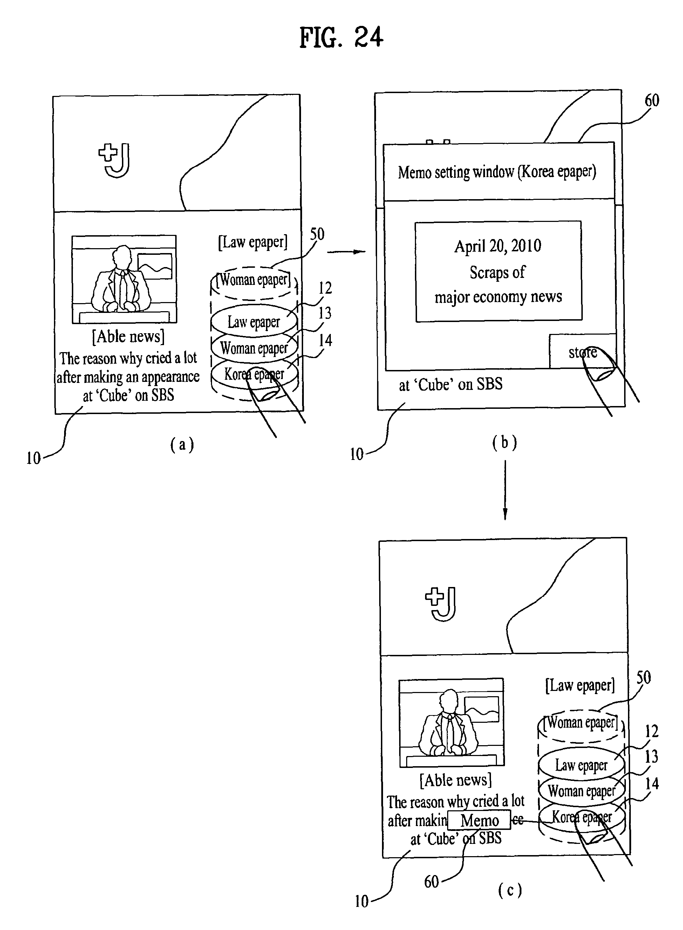

FIG. 24 illustrates an embodiment for a process of attaching a memo of hyperlinks combined by a user.

Referring to FIG. 24(a), when the information 12d, 13d, and 14d, of the respective hyperlinks 12, 13, and 14 are displayed within the storage box 50, if the information associated with a hyperlink is selected from the storage box 50, the controller 180 displays a memo setting window 60 for setting a memo to attach to the hyperlink on the webpage 10

As illustrated in FIG. 24(a), when the information 14d associated with the fourth hyperlink 14 is selected from the storage box 50, the controller 180 displays a memo setting window 60 for setting a memo to attach to the fourth hyperlink 14, which corresponds to the selected information 14d, on the webpage 10 (FIG. 24(b)).

Furthermore, if content is input by the user via the memo setting window 60, (FIG. 24(c)), the controller 180 controls the memo to be stored in the memory 160 by associating the memo to the fourth hyperlink 14.

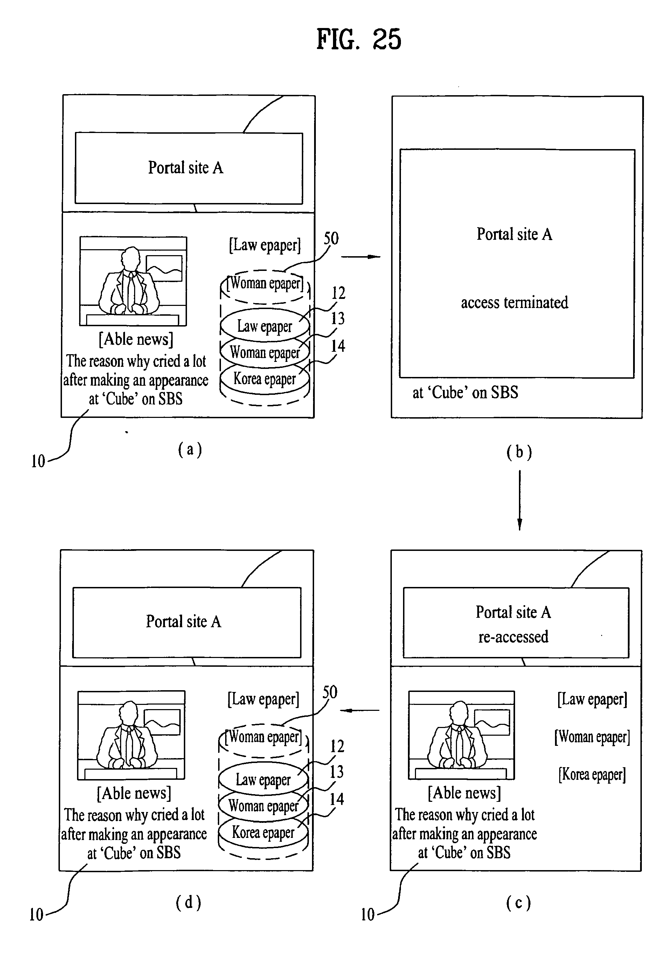

FIG. 25 illustrates a process for displaying hyperlinks according to an embodiment of the present invention. Hyperlinks which are combined by a user within a webpage 10 are stored in the memory 160 as a table shown in Table 1. If the webpage 10 is re-accessed, the table is searched for the hyperlinks combined in the webpage 10 and the found hyperlinks are displayed.

Referring to FIG. 25(a), the controller 180 controls the information of the hyperlinks 12, 13, and 14, which are selected from the webpage 10 by the user, to be stored in the memory 160 as shown in Table 1.

After access to the webpage 10 has been terminated (FIG. 25(b)), if the webpage 10 is re-accessed, the controller 180 searches the table shown in Table 1 for the hyperlinks 12, 13, and 14 mapped to the webpage 10 (FIG. 25(c)). The controller 180 may then control the information 12d, 13d, and 14d, of the respective hyperlinks 12, 13, and 14 to be displayed on the re-accessed webpage 10 (FIG. 25(d)).

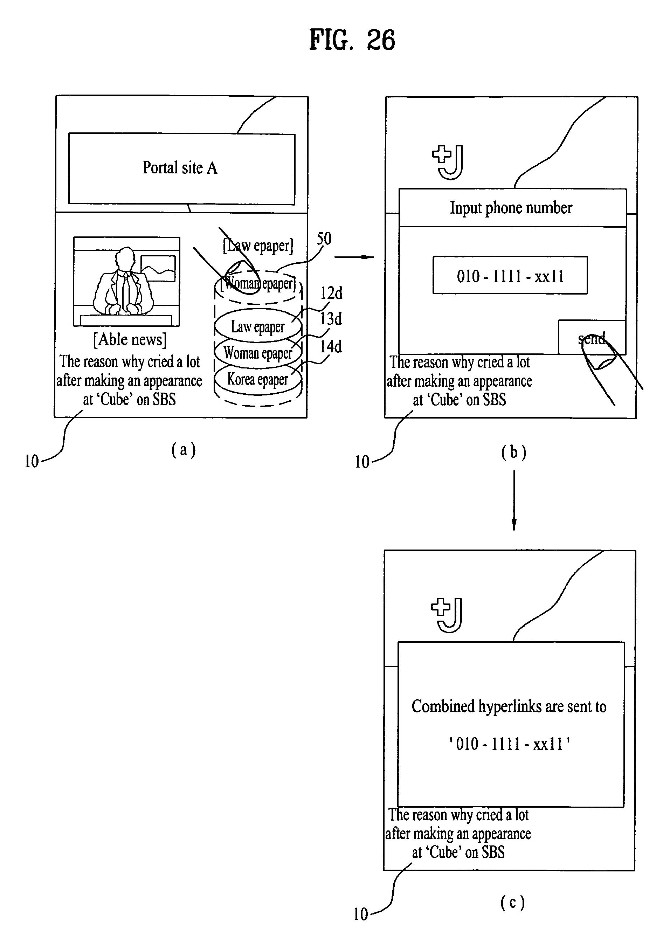

FIG. 26 illustrates a process for sending a message containing the hyperlinks stored in step S115 (FIG. 3) to another terminal according to an embodiment of the present invention.

Referring to FIG. 26(a), when the second, third, and fourth hyperlinks 12, 13, and 14 are stored in the memory 160, if a user inputs a command for transmitting the stored hyperlinks 12, 13, and 14, the controller 180 displays a contact input window 70 for inputting a destination terminal, to which the hyperlinks 12, 13, and 14 are to be transmitted (FIG. 26(b)).

FIG. 26(a) illustrates that the command for transmitting the hyperlinks 12, 13, and 14 is a touch to the storage box 50, however, the input may be received via a keypad or other input device.

Once the destination terminal is input via the contact input window 70, the controller 180 generates a message containing the hyperlinks 12, 13, and 14, and sends the generated message to the prescribed terminal (FIG. 26(c)).

In this example, the prescribed terminal may display the hyperlinks 12, 13, and 14 received from the mobile terminal 100 on a webpage during a web browsing operation.

Accordingly, the present invention provides the following advantages.

First, according to at least one of the embodiments of the present invention, user-specific hyperlinks may be combined from the plurality of hyperlinks included in a webpage for viewing at a later time.

Second, the present invention enables a user to more efficiently browse for user-specific content.

In addition, the above-described methods can be implemented in a program recorded medium as computer-readable codes. The computer-readable media include all kinds of recording devices in which data readable by a computer system are stored. The computer-readable media include ROM, RAM, CD-ROM, magnetic tapes, floppy discs, optical data storage devices, and the like for example and also include carrier-wave type implementations (e.g., transmission via Internet). And, the computer can include the controller 180 of the terminal.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile terminal (100), comprising:
a memory unit (160);
a wireless communication unit (110);
a touchscreen (151) configured to display a webpage including at least one hyperlink; and
a controller (180) configured to control the touchscreen to display the webpage,
**characterized by**,
the controller configured to store a hyperlink selected on the touchscreen in the memory unit, to control the touchscreen to display information associated with the selected hyperlink , and to control the touchscreen to display a webpage linked to the selected hyperlink when the displayed information is selected.

2. The mobile terminal of claim 1, wherein the controller determines a frequency which the at least one hyperlink is accessed and controls the at least one hyperlink to be distinguished according to the frequency which the at least one hyperlink is accessed.

3. The mobile terminal of claim 1, wherein the controller controls the webpage linked to the selected hyperlink to be displayed as a popup window or a preview image on the touchscreen.

4. The mobile terminal of claim 1, wherein the controller controls the information to be displayed as a thumbnail image on the touchscreen.

5. The mobile terminal of claim 1, wherein the controller controls webpages respectively linked to at least two selected hyperlinks to be sequentially displayed on the touchscreen with a preset periodicity.

6. The mobile terminal of claim 1, wherein the controller partitions the touchscreen into a first region and a second region, and wherein the webpage is displayed on the first region and the information associated with the selected hyperlink is displayed on the second region.

7. The mobile terminal of claim 6, wherein the information displayed on the second region is displayed as a page in a book or a tree structure.

8. The mobile terminal of claim 1, wherein the controller controls an icon to be displayed on the touchscreen, such that the selected hyperlink is displayed in the icon and a hyperlink dragged to the icon may be stored in the memory unit.

9. The mobile terminal of claim 8, wherein the controller controls the webpages respectively linked to at least two selected hyperlinks to be sequentially displayed on the touchscreen with a preset periodicity when the icon is selected.

10. The mobile terminal of claim 9, wherein each time the icon is selected, the controller sequentially shifts the display of the webpages respectively linked to the at least two selected hyperlinks backward or forward.

11. The mobile terminal of claim 9, wherein when the icon receives an input having a first pattern, the controller sequentially shifts the display of the webpages respectively linked to the at least two selected hyperlinks forward, and wherein when the icon receives an input having a second pattern, the controller sequentially shifts display of the webpages respectively linked to the at least two selected hyperlinks backward.

12. The mobile terminal of claim 1, wherein when the hyperlink is selected, the controller displays a memo setting window for writing a memo to be associated with the selected hyperlink.

13. The mobile terminal of claim 1, wherein the controller maps the selected hyperlink and a webpage address linked to the selected hyperlink to each other, and controls the mapped hyperlink and webpage address to be stored as a table in the memory.

14. The mobile terminal of claim 1, wherein the controller periodically checks the stored hyperlink to determine if the hyperlink is valid.

15. A method of controlling a mobile terminal (100), the method comprising:
displaying (S111), a webpage including a plurality of hyperlinks;
storing (S115), a hyperlink selected from the plurality of hyperlinks of the webpage in a memory (160) of the mobile terminal;
displaying (S116), information associated with the selected hyperlink; and
displaying (S118), a webpage linked to the selected hyperlink corresponding to the displayed information when the displayed information is selected.
